# EUROPEAN PATENT APPLICATION

(11) **EP 3 461 682 A1**
(43) Date of publication of application: **03.04.2019**
(21) Application number: 18196791.0
(22) Date of filing: 26.09.2018
(51) Int. Cl.: B60N 2/07, B60N 2/015, B60N 2/42, B60N 2/427

(54) **SYSTEM FOR THE ASSEMBLY OF A VEHICLE SEAT TO A VEHICLE BODYWORK**

(30) Priority: 29.09.2017 ES 201731160
(71) Applicant: Seat, S.A., 08760 Martorell (ES)
(72) Inventor: MONTES MARTÍN, Marcos Daniel, 08760 Martorell (ES)
(74) Representative: Ponti & Partners, S.L.P

(57) **Abstract**

A system for the assembly of a vehicle seat to a bodywork of the vehicle.

The system for the assembly of a vehicle seat (1) to a vehicle bodywork, where the seat (1) comprises a support (11) and a bedplate (2), the bedplate (2) being attached to the bodywork of the vehicle, the bedplate (2) holding the support (11) by means of an attachment element (3), said attachment element (3) traversing the support (11) and the bedplate (2), the system of assembly comprising a slot (21), which is traversed by the attachment element (3), and the slot (21) stretches in a horizontal direction, in such a way that the slot (21) enables the guiding of the attachment element (3) in the horizontal direction from a resting position, wherein the slot (21) features a narrowing, in such a way that a displacement of the attachment element (3) within the slot (21) causes a consumption of energy.

It enables an increase in the energy absorption capability in the event of an impact.

## Description

The present invention relates to a system for the assembly of a vehicle seat to a vehicle bodywork.

### Background of the invention

As a result of a collision involving a vehicle, a great amount of energy is generated. Said energy is absorbed partially by the structure of the vehicle, and partially by the occupants of the same, which may lead to injuries.

One of the goals of vehicle manufacturers is to provide safety features which absorb as much as possible the energy produced in the event of an impact, in order that the impacts suffered by the vehicle occupants are as mild as possible. It is likewise intended that the deceleration experienced by said occupants should be as gentle as possible. These safety features include, among others, seat belts, airbags, improvements in the structure of the seats, etc.

We are currently reaching a point where increasing the energy absorption capacity of elements such as the seat belt, airbags, vehicle structure, etc. requires a considerable investment and increase in part costs, complicating their implementation in the vehicle. This is the reason for the quest for new areas for the absorption of the energy from an impact other than those mentioned above.

Document KR20100136589 discloses a safety device for a seat to reduce the impact on a person. This device adjusts the position of the seat, moving it backward or forward. To this end, a lower rail attached to the vehicle features a number of elongated holes disposed in a longitudinal direction, and an upper rail attached to the lower rail in such a way that it may slide along the lower rail. The upper rail features a through-hole, in such a way that a pin may be inserted through the hole, and the forward or backward movement of the upper rail along the lower rail is predetermined by the length of said hole.

However, the energy absorption capability of this solution is limited, as the elongated holes or slots feature a constant width.

Therefore, one object of the present invention is to provide a system of assembly between a seat and the bodywork of a vehicle which increases the energy absorption capability in the event of an impact, without increasing notably the complexity of the assembly.

### Description of the invention

By means of the assembly system of the invention, the aforementioned drawbacks are resolved, and other advantages, to be disclosed below, are provided.

In accordance with the present invention, the assembly system between a vehicle seat and a bodywork of the vehicle, where the seat comprises at least one support and at least one bedplate, where the at least one bedplate is attached to the bodywork of the vehicle, where the at least one bedplate holds the at least one support by means of at least one attachment element, where the at least one attachment element traverses the at least one support and the at least one bedplate, where the assembly system comprises at least one slot, where the at least one slot is traversed by the at least one attachment element, and where the at least one slot stretches in a substantially horizontal direction, in such a way that the at least one slot enables the guiding of the at least one attachment element in the substantially horizontal direction from a resting position, characterised in that the at least one slot features a narrowing from the resting position, in such a way that the displacement of the at least one attachment element within the slot causes a consumption of energy.

By means of the assembly system in accordance with the present invention, the energy absorption capability in the event of an impact is increased inexpensively, in comparison with the currently known systems. Energy is absorbed directly by the seat structure, distributing the energy of the impact among a greater number of components.

The "bedplate" is understood to be the component which attaches and holds the seat to the bodywork of the vehicle, said attachment of the seat being produced via the support, in such a way that bedplate and support are linked in order to produce the aforementioned attachment of the seat. "Vehicle bodywork" is understood to be any structural element of the vehicle, providing the vehicle with rigidity and strength.

Correspondingly, when speaking of a substantially horizontal direction, said horizontal direction may be any direction on the plane of movement of the vehicle. Thus, the substantially horizontal direction may be the direction of movement of the vehicle, the present system acting to absorb energy from a front or rear impact. Conversely, the substantially horizontal direction may be perpendicular to the direction of movement of the vehicle, the present system acting to absorb energy from a side impact. Alternatively, any substantially horizontal direction may be valid, provided that the direction is substantially parallel to a direction in which the impact to the vehicle may occur.

It should be mentioned that the at least one slot may be disposed on the seat or on the bedplate, producing the same technical effect.

It is thus seen that the absorption of energy is produced by the distortion undergone by the slot when the attachment element moves along said slot. The narrowing of the slot guides the attachment element along the horizontal direction, limiting the displacement of the attachment element and progressively consuming energy along the slot.

In accordance with a preferred embodiment, the narrowing of the at least one slot is progressive throughout the substantially horizontal direction, bringing about the absorption of energy in the event of an impact in a progressive and sequential manner, enabling a greater absorption of energy, the greater the severity of the impact.

In accordance with one embodiment, the at least one bedplate comprises the at least one slot and the at least one attachment means comprises a nut, where the nut is joined to the at least one support by means of a joining means, where the joining means presents a rigidity such that it holds the at least one attachment means in the resting position.

Alternatively, the at least one support comprises the at least one slot and the at least one attachment means comprises a nut, where the nut is joined to the at least one support by means of a joining means, where the joining means comprises a rigidity such that it holds the at least one attachment means in the resting position.

It may thus be observed that the body integrating the slot is independent of the technical effect sought. Likewise, in order to ensure that the attachment element will not be displaced along the slot due to normal accelerations and decelerations during driving, the nut of the attachment means is joined either to the support or to the bedplate, unlike the body where the slot is to be found. The holding of the nut by means of the joining means is important to ensure the comfort of the user in the resting position of the attachment element.

The joining means also presents a rigidity such that it enables the displacement of the at least one attachment element within the slot in the event of the vehicle being involved in an impact. Thus, when a predetermined energy value is surpassed, the joining means will give way or break, enabling the movement and displacement of the attachment element from the resting position to a final position. The displacement of the attachment element shall be along the substantially horizontal slot, the distance being greater or less in accordance with the energy of the impact.

Preferably, the joining means shall be a weld, for example at least one spot weld between the nut and the support or the bedplate, although it could also be a different joining means, e.g. an adhesive.

The joining means may also be a torque setting between the at least one attachment means and the nut, thus generating pressure between the nut and the head of the bolt, the support and the bedplate being between the two, forming a sandwich. It should be mentioned that the torque setting could be adapted for the holding of the at least one attachment means in the resting position.

Preferably, the at least one slot features a first width at the first resting position of the at least one attachment element, and where the at least one attachment means comprises a bolt, where the first width is substantially equal to the diameter of the shank of the bolt, said bolt being held by means of a nut.

Advantageously, the at least one bedplate is attached to the bodywork of the vehicle and, in accordance with a preferred embodiment, the at least one bedplate is a mobile rail which can be displaced along a fixed rail in a substantially horizontal direction, and where the fixed rail is fixed to the bodywork or structure of the vehicle. As has been mentioned above, the support is directly attached to the bedplate in any of the previous embodiments.

Said narrowing is preferably in the direction of forward movement of the vehicle, in such a way that energy is consumed in a front-end impact of the vehicle, and/or the narrowing is in the opposite direction to that of forward movement of the vehicle, in such a way that energy is consumed in a rear-end impact of the vehicle.

In accordance with one embodiment, the at least one slot comprises a first narrowing in the direction of forward movement of the vehicle and a second narrowing in the opposite direction to that of forward movement of the vehicle, where the resting position is between the first narrowing and the second narrowing, in such a way that the system is designed to absorb the energy from an impact in either of the two aforementioned directions. It is emphasised that the attachment element is between the two slots, defining the resting position at this point.

Furthermore, the first narrowing in the direction of forward movement of the vehicle and the second narrowing in the opposite direction to that of forward movement of the vehicle may define different lengths and angles of narrowing, in such a way that the requirements of energy consumption may be adapted in accordance with the type of impact, as a front-end impact is not the same as a rear-end impact.

As may be seen, the length and the narrowing, that is, the reduction in width of the slot throughout the length of said slot, enable the determination of the behaviour of the energy absorption system, enabling the determination of the maximum time of absorption, the maximum amount of absorption, among other parameters.

Alternatively, and depending on the direction in which it is intended to absorb the energy, the narrowing may be in any orientation and direction; e.g. oriented perpendicularly to the direction of forward movement of the vehicle and directed toward the interior of the vehicle. Thus, the energy from a side impact would be absorbed.

### Brief description of the drawings

For a better understanding of that which is described herein, a set of drawings is attached which, schematically and by way of a non-limiting example only, represent a practical case of an embodiment.
Figure 1 is a perspective view of a seat equipped with the assembly system in accordance with the present invention;
Figures 2 and 3 portray details of the connection between the seat and the bedplate in the assembly system in accordance with the present invention;
Figure 4 is a perspective view of the bedplate of the assembly system in accordance with the present invention;
Figure 5 is a plan view of a part of the bedplate of the assembly system in accordance with the present invention;
Figure 6 is a plan view of the connection between the seat and the bedplate of the assembly system in accordance with the present invention; and
Figure 7 is a cross-sectional view seen along the line VII-VII indicated in figure 6.

### Description of a preferred embodiment

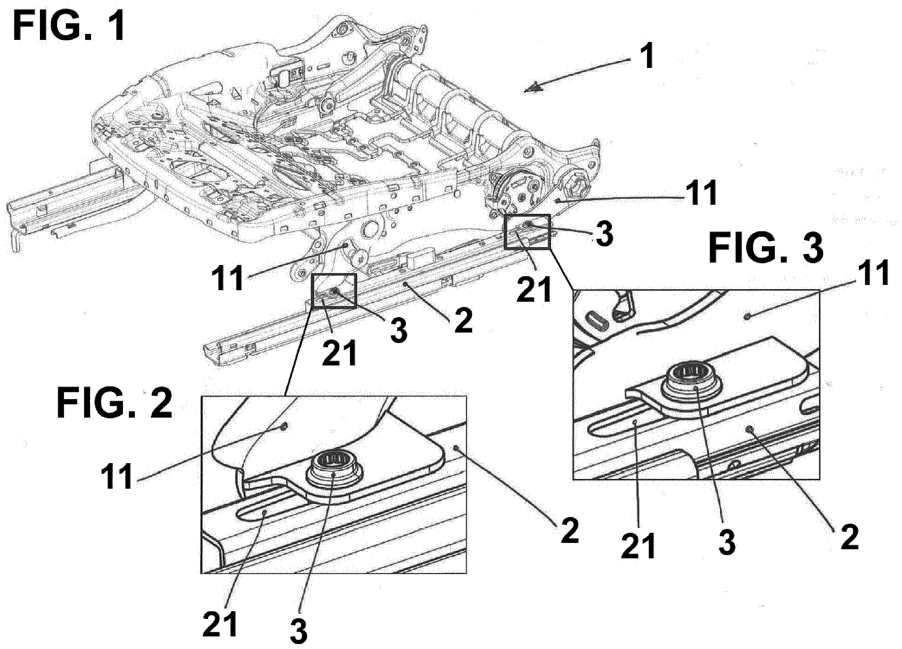

As is portrayed in figure 1, the assembly system in accordance with the present invention enables the linking of a vehicle seat 1 with a vehicle bodywork.

The seat, indicated throughout with the reference number 1, comprises at least one support 11 and at least one bedplate 2, where the at least one bedplate 2 is linked to the bodywork of the vehicle.

Said at least one bedplate 2 is, for example, a mobile rail, which is fixed to the bodywork of the vehicle. The linking of the bedplate 2 with the bodywork of the vehicle is achieved, for example, by means of a plurality of bolted joints.

In accordance with the embodiment portrayed, the seat 1 comprises four supports 11 and two bedplates 2, where each support 11 enables the linking and elevation of the structure of the seat with regard to the bedplate 2.

The at least one bedplate 2 holds the at least one support 11 by means of at least one attachment element 3, which traverses the at least one support 11 and the at least one bedplate 2.

The assembly system further comprises at least one slot 21, which is traversed by the at least one attachment element 3, and the at least one slot 21 stretches in a substantially horizontal direction, in such a way that the at least one slot 21 enables the guidance of the at least one attachment element 3 from a resting position in the substantially horizontal direction. In accordance with the preferred embodiment, the substantially horizontal direction is the direction of displacement of the seat along the fixed rail, this coinciding with the direction of forward movement of the vehicle.

In accordance with the embodiment portrayed, each bedplate 2 features two slots 21, one for each support 11. However, it should be mentioned that the at least one slot 21 may be located on the or each support 11.

Figures 2 and 3 portray the detail of the portions of the bedplate 2 with the slots 21, the supports 11 being adjacent to their respective bedplate 2. Figure 2 and figure 3 portray different bedplate 2 structures, the technical result of the assembly system of the present invention being independent of said different configurations.

As may be observed, the attachment element 3 links the support 11 with the bedplate 2, traversing both components. Thus, the attachment element 3 traverses the slot 21 executed in the bedplate 2 and also traverses a hole punched in the support 11. The hole punched in the support 11 does not feature the properties of the slot 11 to be described below.

To increase the capability of absorption of energy in the event of an impact, the or each slot 21 features a narrowing from the resting position of the attachment element 3, in such a way that a displacement of the at least one attachment element 3 along the slot 21 produces a consumption of energy.

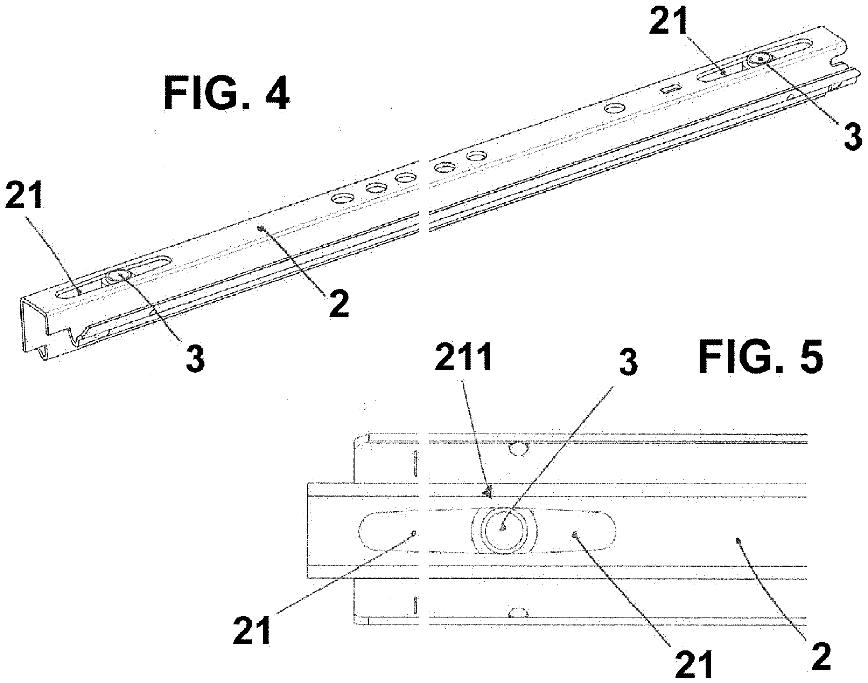

The configuration of the slots 21 in the bedplate 2 may be seen in greater detail in figures 4 and 5, where the support 11 has been eliminated from the drawing.

In accordance with the embodiment portrayed, the narrowing of the or each slot 21 is progressive, throughout the substantially horizontal direction.

The narrowing is preferably in the direction of forward movement of the vehicle and/or in the opposite direction to that of forward movement of the vehicle.

In accordance with the embodiment portrayed in figure 5, the or each slot 21 comprises a first narrowing in the direction of forward movement of the vehicle and a second narrowing in the opposite direction to that of forward movement of the vehicle, where the resting position is between the first narrowing and the second narrowing, in such a way that energy is absorbed in the event of a front or rear impact.

The or each slot 21 comprises a first width 211, as may be better viewed in figure 5, defining the first resting position of the at least one attachment element 3.

In the event that the attachment means 3 should be a bolt, the first width 211 is substantially equal to the diameter of the shank of the bolt.

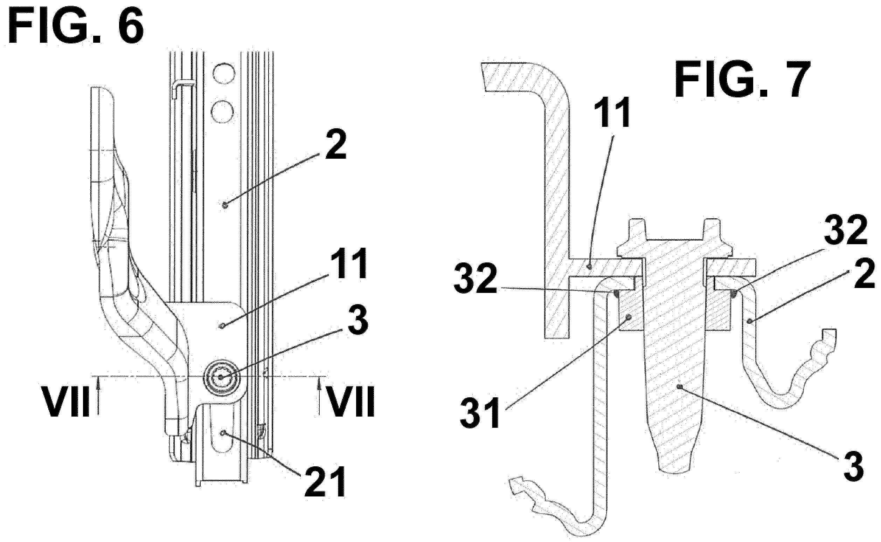

Figure 7 portrays an embodiment of the joint between the support 11 and the bedplate 2 by means of an attachment element 3. This figure 7 is a cross-sectional view seen along the line VII-VII indicated in figure 6.

In accordance with this embodiment, the attachment means 3 comprises a nut 31, which is fixed to the support 11 by a joining means 32, where the joining means 32 provides a rigidity such that it holds the at least one attachment means 3 in the resting position. This rigidity of the joining means 32 is such that it enables the displacement of the at least one attachment element 3 along the slot 21 in the event of an impact undergone by the vehicle, when a predetermined energy value is surpassed, overcoming the resistance provided by the joining means 32.

The joining means 32 is preferably a weld, although this could also be an alternative joining means, such as a torque setting between the attachment means 3, such as a bolt and the nut 31, or by means of an adhesive, or similar. By means of the joining means 32 it is ensured that the attachment means 3 remains in the resting position under normal driving conditions of the vehicle. Likewise, the joining means 32 features a predetermined rigidity value such that, should the energy of the impact not surpass the predetermined rigidity value, the release of the attachment means 3 along the slot 21 will not occur. Thus, and by way of an example, the assembly system may be designed in such a way that, in the event of an impact of low energy value, the breakage of the joining means 32 does not occur, and the attachment means 3 will therefore remain in the resting position. In this way, only the conventional systems will act, such as the seat belts, the vehicle chassis legs... without the system of the present invention absorbing any of the energy.

In the event of an impact on the vehicle, be it at the front or rear, the force of the impact will overcome the rigidity of the joining means 32, in such a way that the or each attachment means 3 will be displaced within the or each slot 21. The narrowing in the direction of the displacement of the attachment element will cause a consumption of energy, in such a way that part of the energy of the impact will be absorbed by means of the friction between the attachment element 3 and the slot 21 at this narrowing, in addition to the distortion of the walls defining the slot 21.

In spite of the fact that reference has been made to a specific embodiment of the invention, it will be evident to a person skilled in the art that the assembly system disclosed herein is susceptible to numerous variations and modifications, and that all the details mentioned may be replaced by other technically equivalent details, without departing from the scope of protection defined by the attached claims.

## Claims

1. A system of assembly between a vehicle seat (1) to the vehicle bodywork, where the seat (1) comprises at least one support (11) and at least one bedplate (2) where the at least one bedplate (2) is attached to the bodywork of the vehicle, where the at least one bedplate (2) holds the at least one support (11) by means of at least one attachment element (3), where the at least one attachment element (3) traverses the at least one support (11) and the at least one bedplate (2), where the system of assembly comprises at least one slot (21), where the at least one slot (21) is traversed by the at least one attachment element (3), and where the at least one slot (21) stretches in a substantially horizontal direction, in such a way that the at least one slot (21) enables the guiding of the at least one attachment element (3) in a substantially horizontal direction from a resting position,
**characterised in that** the at least one slot (21) features a narrowing from the resting position, in such a way that a displacement of the at least one attachment element (3) within the slot (21) causes a consumption of energy.

2. A system of assembly, as claimed in claim 1, wherein the narrowing of the at least one slot (21) is progressive throughout the substantially horizontal direction.

3. A system of assembly, as claimed in either of the preceding claims, wherein the at least one bedplate (2) comprises the at least one slot (21).

4. A system of assembly, as claimed in claim 3, wherein the at least one attachment means (3) comprises a nut (31), where the nut (31) is joined to the at least one support (11) by means of a joining means (32), where the joining means (32) presents a rigidity such that it holds the at least one attachment means (3) in the resting position.

5. A system of assembly, as claimed in either of claims 1 or 2, wherein the at least one support (11) comprises the at least one slot (21).

6. A system of assembly, as claimed in claim 5, wherein the at least one attachment means (3) comprises a nut (31), where the nut (31) is joined to the at least one support (2) by means of a joining means (32), where the joining means (32) presents a rigidity such that it holds the at least one attachment means (3) in the resting position.

7. A system of assembly, as claimed in either of claims 4 or 6, wherein the joining means (32) presents a rigidity such that it enables the displacement of the at least one attachment element (3) within the slot (21) in the event of the vehicle being involved in an impact.

8. A system of assembly, as claimed in any of claims 4 to 7, wherein the joining means is a weld.

9. A system of assembly, as claimed in any of claims 4 to 7, wherein the joining means is a torque setting between the at least one attachment means (3) and the nut (31).

10. A system of assembly, as claimed in any of the preceding claims, wherein the at least one slot (21) comprises a first width (211) in the first resting position of the at least one attachment element (3), and wherein the at least one attachment element (3) comprises a bolt, where the first width (211) is substantially equal to the diameter of the shank of the bolt.

11. A system of assembly, as claimed in any of the preceding claims, wherein the at least one bedplate (2) is a mobile rail.

12. A system of assembly, as claimed in any of the preceding claims, wherein the at least one bedplate (2) is affixed to the bodywork of the vehicle.

13. A system of assembly, as claimed in claim 1, wherein the narrowing is in the direction of forward movement of the vehicle.

14. A system of assembly, as claimed in claim 1, wherein the narrowing is in the opposite direction to that of forward movement of the vehicle.

15. A system of assembly, as claimed in claim 1, wherein the at least one slot (21) comprises a first narrowing in the direction of forward movement of the vehicle and a second narrowing in the opposite direction to that of forward movement of the vehicle, where the resting position is between the first narrowing and the second narrowing.
